# EUROPÄISCHE PATENTANMELDUNG

(11) **EP 0 845 667 A2**
(43) Veröffentlichungstag der Anmeldung: **03.06.1998**
(21) Anmeldenummer: 97250356.9
(22) Anmeldetag: 24.11.1997
(51) Int. Cl.: G01N 1/34, B01D 21/02, B01L 3/08

(54) **Sedimentationsgefäss**

(30) Priorität: 29.11.1996 DE 19651006
(71) Anmelder: Dr. Bruno Lange GmbH, D-14163 Berlin (DE)
(72) Erfinder: Schier, Sabine, 47918 Tönisvorst (DE)
(74) Vertreter: Christiansen, Henning, Dipl.-Ing.

(57) **Zusammenfassung**

Die Erfindung betrifft ein Sedimentationsgefäß (1, 1', 1'') mit einem geschlossenen Gefäßboden zur Trennung von Schwebstoffen (4) und Bildung einer Klarphase (3) bei einem Abwasservolumen (2), mit einer Öffnung zum Einbringen des Abwasservolumen (2) und mit einer im oberen Bereich des Sedimentationsgefäßes (1, 1', 1'') angeordneten, ersten Leitung (10, 18) zur Entnahme einer Probe aus der Klarphase (3) des Flüssigkeit (2). Das Sedimentationsgefäß (1, 1', 1'') weist eine sich in Richtung des Gefäßbodens erweiternde, im wesentlichen kegelstumpfartig ausgebildeten Zone (6) auf.

## Beschreibung

Die Erfindung betrifft ein Sedimentationsgefäß zur Entnahme einer feststoffarmen Probe, insbesondere zur Analyse gelöster Wasserinhaltsstoffe, gemäß der im Oberbegriff des Anspruchs 1 genannten Art.

Zur Ermittlung von Abwasserinhaltsstoffen, beispielsweise durch Bestimmung der Phosphat-Konzentration, mit photometrischen Verfahren ist es bei Schwebstoffe oder Schlammanteile enthaltendem Abwasser in einem gesonderten Verfahrensschritt erforderlich, insbesondere aus lichttechnischen Gründen, eine schwebstoffarme Klarphase zu schaffen. Aus dieser Klarphase wird eine Probe entnommen und durchleuchtet, nachdem dieser Chemikalien zugesetzt werden, welche mit vorhandenen Abwasserinhaltstoffen einen Farbumschlag der Probe bewirken. Dabei wird mittels einer Photozelle die von der Art der Abwasserinhaltsstoffe abhängige Lichtabsorption gemessen.

Es ist bekannt, zur Erzeugung einer meßtechnischen Erfordernissen entsprechend schwebstoffarmen Klarphase bei Schwebstoffe oder Schlammanteile enthaltenden Abwässern ein relativ kleinvolumiges, im wesentlichen zylindrisch ausgebildetes Sedimentationsgefäß einzusetzen, da der Einsatz von Schrägklärern oder Parallelplattenabscheidern, insbesondere aus ökonomischen Gründen, nicht gerechtfertigt ist.

Aus der deutschen Patentanmeldung DE-A1 42 11 633 ist eine Vorrichtung zur Entnahme von Proben einer Flüssigkeit, insbesondere von Schmutzwasser, bekannt, bei welcher ein zylindrisches Rohr als Sedimentationsgefäß vorgesehen ist. Das Sedimentationsgefäß weist eine verschwenkbare Bodenplatte auf, durch welche der Rohrquerschnitt zur Aufnahme einer Schmutzwasserprobe freigebbar ist. Nach erfolgter Sedimentation, bei der sich die Schweb- und/oder Feststoffe des Schmutzwassers am Boden des Sedimentationsgefäßes abgesetzt haben, ist der Schichtaubau des Sediments kontrollierbar und gegebenenfalls auch eine meßtechnische Untersuchung der sich über dem Sediment gebildeten Klarphase möglich.

Die vorstehend beschriebene Lösung weist jedoch den wesentlichen Nachteil auf, daß es bei stark schwebstoffhaltigen Abwasser oder bei Abwasser mit schlecht sedimentierenden Schlämmen zu sehr langen Sedimentationszeiträumen kommt, welche beispielsweise bei der Durchführung von Meßreihen zu unerwünschten Verzögerungen führt. Darüberhinaus bildet sich bei dem bekannten zylindrischen Sedimentationsgefäß nur eine Klarphase von geringer Höhe, wodurch die Entnahme einer Probe aus der Klarphase einen besonderen Aufwand erfordert.

Ausgehend von den Mängeln des Standes der Technik liegt der Erfindung deshalb die Aufgabe zugrunde, ein Sedimentationsgefäß der eingangs genannten Gattung anzugeben, mit welchem in einer wesentlich kürzeren Sentimentationszeit eine Klarphase in für Meßzwecke ausreichender Menge bereitstellbar ist.

Die Aufgabe wird durch kennzeichnende Merkmale gemäß dem Oberbegriff der Ansprüche 1 gelöst.

Die Erfindung schließt die Erkenntnis ein, daß sich bei einem Sedimentationsvorgang in Abwasser bei einer Vergrößerung der für eine Sedimentation notwendigen, sich waagerrecht erstreckenden Wandungsfläche des verwendeten Sedimentationsgefäßes bei gleichem Abwasservolumen die sich über dem Sediment bildende Klarphase zwar in ihrem Volumen, jedoch nicht in ihrem Höhenmaß vergrößert. Gleichermaßen führt eine Vergrößerung der vorstehend genannten Wandung des Sedimentationsgefäßes zu keiner Verkürzung der Sedimentationszeit.

Es wurde jedoch in überraschender Weise gefunden, daß eine im wesentlichen trichterförmige Erweiterung in Richtung des Gefäßbodens im Sedimentationsbereich eines zylindrischen Sedimentationsgefäßes zu einer erheblichen Beschleunigung des Sedimentationsprozesses führt.

Die geneigte Gefäßwandung im Sedimentationsbereich stellt eine Vergrößerung der Oberfläche dar. Auch an dieser Oberfläche bildet sich nach Absinken der im Abwasser befindlichen Schlamm- und/oder Feststoffe eine Klarphase. Aufgrund der Dichteunterschiede zwischen Wasser und Schlamm- und/oder Feststoffen steigt das im wesentlichen schlamm- und/oder feststofffreie Wasser an der geneigten Gefäßwandung in dem Sedimentationsgefäß nach oben. Gleichzeitig drängt dieses Wasser dabei Schlamm- und/oder Feststoffpartikel aus höherliegenden Schichten des in dem Sedimentationsgefäß befindlichen Flüssigkeit zur Sedimentation.

Je stärker sich die Schlamm- und/oder Feststoffpartikel verdichten, je langsamer verläuft der weitere Sedimentationsvorgang. Betrachtet man die Höhe des durch die Schlamm- und/oder Feststoffpartikel bestimmten Pegels bei gleicher Verdichtung bei einem herkömmlichen mit dem bei einem erfindungsgemäßen Sedimentationsgefäß, so liegt der Pegel der sedimentierten Schlamm- und/oder Feststoffpartikel bei dem gemäß der Erfindung trichterförmig ausgebildeten Sedimentationsgefäß tiefer. D.h. der Schlamm verdichtet sich in einem in Richtung des Gefäßbodens trichterförmig erweiternden Sedimentationsgefäß bezogen auf den gleichen Zeitraum in einem geringeren Maß und sinkt daher noch schneller ab.

Durch die gegeneinander und gegenüber der den Gefäßboden bildenden und zur Sedimentation zur Verfügung stehenden waagerechten Wandungsfläche geneigten Wandungsteile des Sedimentationsgefäßes, ist gleichzeitig ein Anheben des Höhenniveaus der sich nach erfolgter Sedimentation aus dem Abwasservolumen bildenden Klarphase erreichbar. Eine höherer Wasserstand der Klarphase erleichtert in günstiger Weise die Entnahme einer schlamm- und/oder schwebstoffreien Probe zu Meßzwecken.

Besonders vorteilhaft bei der Erfindung ist es, daß auch bei relativ schlecht sedimentierenden Schlämmen bei gleichzeitig ausreichender Höhe des Klarphasenvolumens eine Reduzierung der Sedimentationszeit auf nahezu die Hälfte der Zeit erreichbar ist, welche bis zum Abschluß der Sedimentation in einem zylindrischen Sedimentationsgefäß der herkömmlichen Art erforderlich wäre.

Entsprechend der bevorzugten Ausführungsform der Erfindung weist das Sedimentationsgefäß eine im wesentlichen kegelstumpfförmig ausgebildete Zone auf, welcher sich in Richtung des Gefäßbodens trichterförmig erweitert. An die kegelstumpfförmige Zone schließt sich eine zylindrische, den Gefäßboden tragende Zone geringer Länge an.

Nach einer günstigen Weiterbildung der Erfindung stimmt die Grundfläche der kegelstumpfförmigen Zone mit dem Boden des Sedimentationsgefäßes überein.

Das Sedimentationsgefäß weist erfindungsgemäß eine erste und eine zweite Leitung einerseits zwecks Entnahme einer Probe aus der Klarphase und andererseits zwecks Verbindung mit einer einen Unterdruck zum Einbringen eines die Klarphase liefernden Flüssigkeit in das Sedimentationsgefäß oder einen Überdruck zum Herausfördern dieses Flüssigkeit aus dem Sedimentationsgefäß erzeugenden Einrichtung, beispielsweise mit einer in der Drehrichtung steuerbaren Förderpumpe, auf.

Nach der bevorzugten Ausführungsform der Erfindung sind die erste und die zweite Leitung - sich in Richtung der Längsachse des Sedimentationsgefäßes erstreckend - an der oberen, dem Gefäßboden gegenüberliegenden, Zone angeordnet, wobei die erste Leitung auf gleicher Achse liegend innerhalb der zweiten Leitung positioniert ist. Die innen liegende Leitung ist innerhalb der Rohr-in-Rohr-Anordnung durch Abstandhalter fixiert.

Entsprechend einer anderen vorteilhaften Ausführungsform der Erfindung ist die erste Leitung zur Entnahme einer Probe aus der Klarphase in der Wandung des keglstumpfförmigen Zones angeordnet, so daß die die Entnahme in im wesentlichen radialer Richtung erfolgt. Bauliche Vorteile ergeben sich hierbei insbesondere dadurch, daß die konstruktiv relativ aufwendige Rohr-in-Rohr-Führung der beiden vorgesehenen Leitungsanschlüsse entfällt.

Für das Ein- und Ausbringen des zu kontrollierenden Flüssigkeit in das Sedimentationsgefäß ist entsprechend der bevorzugten Ausführungsform der Erfindung im Gefäßboden eine, beispielsweise durch ein Magnetventil, steuerbare Verschlußeinrichtung vorgesehen. Die zeitliche Koordinierung des Betriebs der die entsprechenden Druckbedingungen für Ein- und Ausbringen der Abwassermenge in das Sedimentationsgefäß erzeugenden Pumpeneinrichtung und der Aktivierung des Magnetventils der Verschlußeinrichtung am Gehäuseboden erfolgt über eine gesonderte Steuerung.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine bevorzugte Ausführungsform des erfindungsgemäßen Sedimentationsgefäßes im Schnitt,
- Figur 2: eine vorteilhafte Weiterbildung der in Figur 1 gezeigten Erfindung als Teilschnitt,
- Figur 3: eine andere Ausführungsform eines erfindungsgemäßen Sedimentationsgefäßes in perspektivischer Darstellung sowie
- Figur 4: als Ausführungsbeispiel die Teilschnittdarstellung einer Kläranlage mit Abwasserbecken und der erfindungsgemäßen Probenentnahmeeinrichtung.

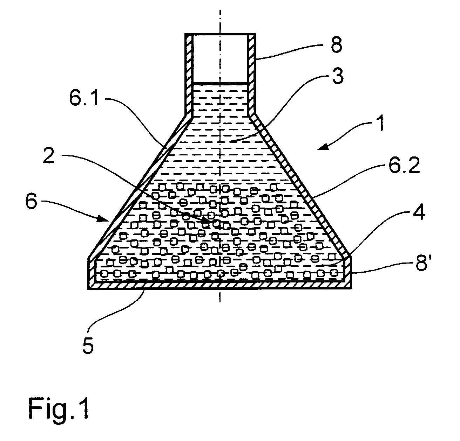

Das in Figur 1 dargestellte Sedimentationsgefäß 1 weist einen geschlossenen Boden 5 auf und enthält Schlamm- und/oder Feststoffpartikel aufweisendes Abwasser 2. Das Abwasser 2 wird nach Ablauf der Sedimentationszeit in eine im wesentlichen partikelfreie Klarphase 3 und in eine in überwiegendem Maße Schlamm- und/oder Feststoffpartikel enthaltende Phase 4 separiert.

Das Sedimentationsgefäß 1 weist drei unterschiedlich ausgebildete Zonen 6, 8, 8' auf. Zwischen einer oberen, zylindrisch ausgebildeten Zone 8 des Sedimentationsgefäßes 1 und einer, den Boden 5 aufweisenden, zylindrischen Zone 8' ist eine sich in Richtung des Gefäßbodens 5 erweiternde Zone 6 vorgesehen. Diese Zone ist kegelstumpfförmig ausgebildet, wobei sich die Wandungsabschnitte 6.1 und 6.2 unter einem gleich großen, spitzen Winkel gegeneinander geneigt erstrecken.

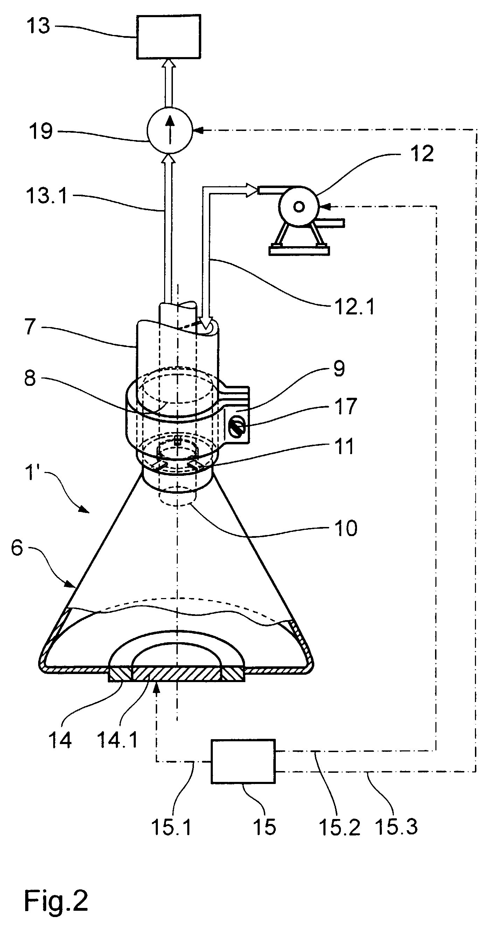

Figur 2 zeigt ein ungefülltes Sedimentationsgefäß 1' mit einer Zone 6 in Form eines sich in Richtung des Gefäßbodens erweiternden, geraden Kegelstumpfes. Die Grundfläche des Kegelstumpfes 6 stimmt mit dem Boden 5 des Sedimentationsgefäßes 1' überein. An dem oberen, als zylindrisch ausgebildeten, Zone 8 ist eine erste Leitung 10 zur Entnahme einer Probe aus der Klarphase (vergleiche die Position 3 in Figur 1) angeordnet. Er bildet zusammen mit der auf gleicher Achse liegenden zweiten Leitung 7 für die das zu prüfende Abwasservolumen in bzw. aus dem Sedimentationsgefäß 1' bewegende Förderpumpe 12 eine Rohr-in-Rohr-Anordnung. Die Entnahmeleitung 10 ist hierbei innerhalb des Rohrabschnitts 8 des Sedimentationsgefäßes 1' durch Abstandhalter 11 arretiert, wobei die zweite, auf den Zone 8 aufgeschobene Leitung 7 mittels einer Schelle 9 in ihrer Position fixiert ist.

Am Boden 5 des Sedimentationsgefäßes 1' ist eine Verschlußeinrichtung 14 vorgesehen, deren Durchlaß durch ein Magnetventil 14.1 steuerbar ausgebildet ist. Über den Gefäßboden 5 wird das zu untersuchende Abwasservolumen (vergleiche die Position 2 in Figur 1) in das Sedimentationsgefäß 1' eingebracht. Nach erfolgter Probenentnahme aus der sich bildenden Klarphase wird das gesamte Abwasservolumen im wesentlichen vollständig wieder aus dem Sedimentationsgefäß 1' entfernt.

Der für Einbringen und Entfernen des Flüssigkeit erforderliche Druck wird durch eine Förderpumpe 12 mit Drehrichtungsumkehr, welche über die Leitung 7 mit dem Sedimentationsgefäß 1' verbunden ist, erzeugt. Die aus der Klarphase entnommene Probe wird über die Leitung 10 durch die Pumpe 19 einer optischen Meß- und Auswerteeinrichtung 13 zugeführt.

Die Bewegungsrichtung der entsprechenden Flüssigkeitsströme ist durch die Pfeile 12.1 und 13.1 gekennzeichnet.

Zur zeitlichen Koordinierung des Betriebes der Förderpumpen 12 bzw. 19 und des Magnetventils 14.1 der Verschlußeinrichtung 14 ist eine Steuerung 15 vorgesehen, welche über Steuerleitungen 15.1, 15.3 und 15.3 mit der Förderpumpe 12 für den Transport der Abwassermenge, die Förderpumpe 19 für den Transport der aus der Klarphase entnommenen Probe und der optischen Meß- und Auswerteeinrichtung 13 verbunden ist.

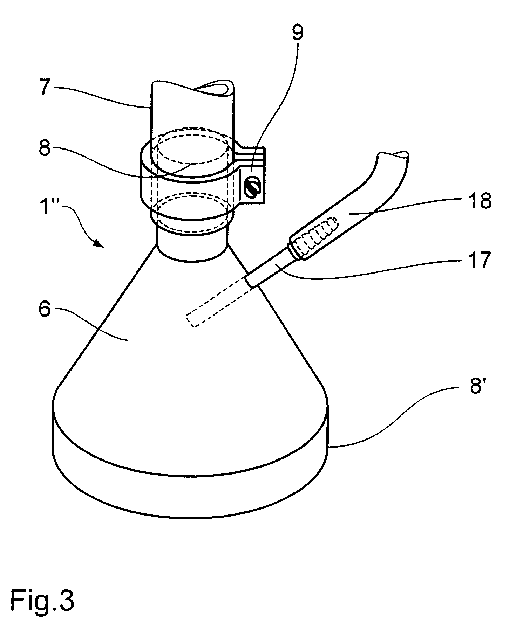

Das in Figur 3 dargestellte Sedimentationsgefäß 1'' weist einen zylindrisch ausgebildeten oberen Zone 8 und einem unteren Zone 8' größeren Durchmessers auf, welcher den Gefäßboden trägt. Zur Verbindung des unteren und des oberen Zones 8, 8' ist eine kegelstumpfförmige Zone 6 vorgesehen, welcher sich in Richtung des Gefäßbodens erweitert.

Die Leitung 18 zur Entnahme der Probe aus der Klarphase ist über einen in die kegelstumpförmige Zone 6 eingesetzten Stutzen 17 mit dem Sedimentationsgefäß 1'' verbunden. Die Leitung 7 zum Anschluß einer Förderpumpe zum Transport der Abwassermenge in das oder aus dem Sedimentationsgefäß 1'' ist mittels einer Schelle 9 an dem oberen Zone 8 befestigt.

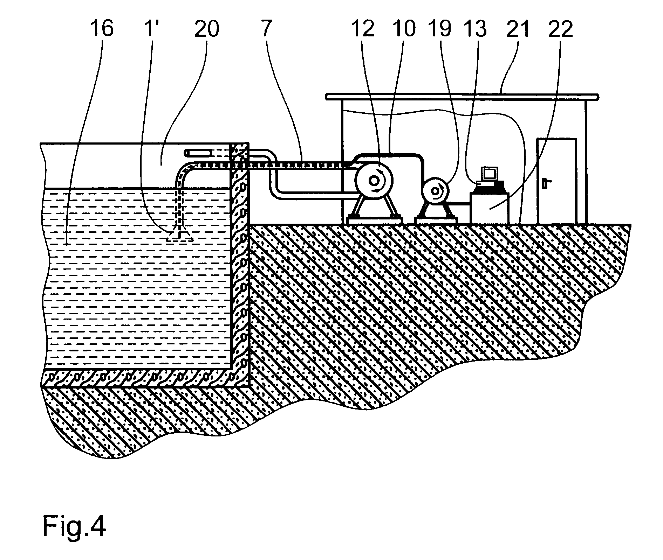

In dem in Figur 4 dargestellten Teilschnitt einer Kläranlage mit einem Abwasserbecken 20 ist ein erfindungsgemäßes Sedimentationsgefäß 1' gezeigt, welches vollständig von zu untersuchendem Abwasser 16 umgeben ist.

Über die Leitung 7 wird in Verbindung mit der in der Meßstation 21 befindlichen Förderpumpe 12 eine zu untersuchende Abwassermenge in das Sedimentationsgefäß 1' gesaugt. Nach erfolgter Sedimentation, welche aufgrund des durch einen Boden geschlossenen Sedimentationsgefäßes 1' ungestört durch Strömungen innerhalb des Abwasserbeckens 20 stattfindet, kann über die Leitung 10 mittels einer im Saugbetrieb arbeitenden Dosierpumpe 19 eine Probe aus der in dem Sedimentationsgefäß 1' entstandenen Klarphase entnommen und in die optischen Meß- und Auswerteeinrichtung 13 eines Meßplatzes eingeleitet werden.

Zur Bestimmung des Phosphatgehaltes des Abwassers 16 wird zunächst einer bestimmte Menge die der Klarphase entnommene Probe in der optischen Meß- und Auswerteeinheit 13 mit einer bestimmten Menge schwefelsaurer Molybdat-Vanadat-Lösung versetzt, welche mit dem Abwasser in Abhängigkeit von dessen Phosphatgehalt zu einer gelben Phosphor-Vanadomolybdänsäure (P-V-Mo-Säure) reagiert. Die Intensität der Gelbfärbung und damit auch das Maß der Lichtabsorption ist der Phosphatkonzenttration im Abwasser direkt proportional.

Anschließend durchleuchtet die optische Meß- und Auswerteeinheit 13 die Probe und mißt mittels einer Photozelle die Intensität des die Probe passierenden Lichts. Daraus wird die Lichtabsorption und die Phosphatkonzentration berechnet.

Zur Berechnung und Anzeige der meßtechnisch ermittelten Phosphatkonzentration sowie zur Steuerung der gesamten Anlage ist ein Steuerrechner 22 vorgesehen, welcher auch die nicht dargestellte Steuerung (vergleiche die Position 15 in Figur 2) für einen zeitlich synchronen Betrieb der Förderpumpe 12 und der Verschlußeinrichtung am Boden des Sedimentationsgefäßes 1' bzw. zur zeitgerechten Aktivierung der Dosierpumpe 19 aufweist.

Die Erfindung beschränkt sich in ihrer Ausführung nicht auf die vorstehend angegebenen bevorzugten Ausführungsbeispiele. Vielmehr ist eine Anzahl von Varianten günstig, welche von der dargestellten Lösung auch bei grundsätzlich anders gearteten Ausführungen Gebrauch macht.

## Patentansprüche

1. Sedimentationsgefäß (1, 1', 1'') zur Trennung von Schwebstoffen (4) von der Klarphase (3) einer Flüssigkeit, inbesondere bei Abwässern (2), mit einem geschlossenen Gefäßboden, einer Öffnung zum Einleiten der zu untersuchenden Flüssigkeit (2) und einer im oberen Bereich angeordneten, ersten Leitung (10, 18) zur Entnahme einer Probe aus der Klarphase (3) der Flüssigkeit (2),
**gekennzeichnet durch**
eine im wesentlichen unterhalb der Entnahmeleitung vorgesehene Zone (6), welche sich in Richtung des Gefäßbodens (5) erweitert.

2. Sedimentationsgefäß nach Anspruch 1, **dadurch gekennzeichnet**, daß die Zone (6) im wesentlichen kegelstumpfförmig ausgebildet ist.

3. Sedimentationsgefäß nach einem der vorhergehenden Ansprüche, **dadurch gekennzeichnet**, daß die Zone (6) als gerader Kegelstumpf ausgebildet ist.

4. Sedimentationsgefäß nach Anspruch 3, **dadurch gekennzeichnet**, daß die Grundfläche des Kegelstumpfes (6) der Fläche des Gefäßbodens (5) entspricht.

5. Sedimentationsgefäß nach einem der vorhergehende Ansprüche, **dadurch gekennzeichnet**, daß im oberen Gefäßbereich eine sich in axialer Richtung erstreckende erste Leitung (10) zur Entnahme der Probe aus der Klarphase (3) vorgesehen ist.

6. Sedimentationsgefäß nach einem der Ansprüche 1 bis 4, **dadurch gekennzeichnet**, daß sich die erste Leitung (18) zur Entnahme der Probe aus der Klarphase (3) im oberen Gefäßbereich sich in im wesentlichen radialer Richtung erstreckt.

7. Sedimentationsgefäß nach Anspruch 5, **dadurch gekennzeichnet**, daß die Leitung (18) zur Entnahme der Probe aus der Klarphase (3) im kegelstumpfförmigen Gefäßbereich (6) angeordnet ist.

8. Sedimentationsgefäß nach einem der vorhergehenden Ansprüche, **dadurch gekennzeichnet**, daß zum Ein- und Ausbringen des Flüssigkeit (2) im Gefäßboden (5) eine Verschlußeinrichtung (14) vorgesehen ist.

9. Sedimentationsgefäß nach Anspruch 8, **dadurch gekennzeichnet**, daß die Verschlußeinrichtung (14) ein Magnetventil (14.1) aufweist.

10. Sedimentationsgefäß nach einem der vorhergehende Ansprüche, **dadurch gekennzeichnet**, daß eine zweite Leitung (7) zum Anschluß einer Überdruck- oder Unterdruck erzeugenden Einrichtung (12) zum Einsaugen des Flüssigkeit (2) in das Gefäß (1', 1'') oder Herausdrücken dieses Flüssigkeit aus dem Gefäß vorgesehen ist.

11. Sedimentationsgefäß nach Anspruch 10, **dadurch gekennzeichnet**, daß die erste Leitung (10) und die zweite Leitung (7) in Form einer koaxialen Rohr-in-Rohr-Führung angeordnet sind.

12. Sedimentationsgefäß nach Anspruch 10, **dadurch gekennzeichnet**, daß die zweite Leitung (7) an der Oberseite des Gefäßes (1'') oberhalb der ersten, sich im wesentlichen radial erstreckenden Leitung (18) vorgesehen ist.

13. Sedimentationsgefäß nach Anspruch 9, **dadurch gekennzeichnet**, daß eine Steuerung (15) vorgesehen ist, welche die Aktivierung der den Druck- oder Unterdruck erzeugenden Einrichtung (12) und des Magnetventils (14.1) der Verschlußeinrichtung (14) zeitlich steuert.
